(19) Europäisches Patentamt European Patent Office Office européen des brevets

(11) **EP 2 059 828 B1**

(12) **FASCICULE DE BREVET EUROPEEN**

(45) Date de publication et mention de la délivrance du brevet:
**23.01.2013 Bulletin 2013/04**

(21) Numéro de dépôt: **07803133.3**

(22) Date de dépôt: **31.08.2007**

(51) Int Cl.:
***G01S 17/87*** *(2006.01)*      ***G01S 5/16*** *(2006.01)*

(86) Numéro de dépôt international:
**PCT/EP2007/059146**

(87) Numéro de publication internationale:
**WO 2008/028877 (13.03.2008 Gazette 2008/11)**

(54) **PROCEDE DE DETECTION DE L'ORIENTATION ET DE LA POSITION D'UN OBJET DANS L'ESPACE**

VERFAHREN ZUM DETEKTIEREN DER RAUMORIENTIERUNG UND POSITION EINES OBJEKTS

METHOD FOR DETECTING THE SPACE ORIENTATION AND POSITION OF AN OBJECT

(84) Etats contractants désignés:
**DE FR GB**

(30) Priorité: **05.09.2006 FR 0607763**

(43) Date de publication de la demande:
**20.05.2009 Bulletin 2009/21**

(73) Titulaire: **THALES**
**92200 Neuilly sur Seine (FR)**

(72) Inventeur: **ROUZES, Siegfried**
**33185 Le Haillan (FR)**

(74) Mandataire: **Esselin, Sophie**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 0 480 825      EP-A- 1 600 726**
**US-A- 4 111 555      US-A1- 4 642 469**

**EP 2 059 828 B1**

**Description**

La présente invention concerne un procédé de détection optique de position et d'orientation d'un objet dans l'espace. Elle s'applique plus particulièrement dans le domaine aéronautique. Dans ce cas, l'objet est un casque de pilote comportant un système de visualisation de casque.

La détermination de la position et de l'orientation d'un objet dans l'espace est un problème concernant de nombreux domaines techniques. Les différentes solutions généralement apportées doivent avoir comme caractéristiques principales de lever toute ambiguïté de position ou d'orientation, de répondre à une dynamique plus ou moins sévère des systèmes et de satisfaire une précision élevée.

Ces systèmes sont utilisés en aéronautique, pour la détection de posture de tête, notamment pour les casques d'avions d'arme, d'hélicoptères militaires, civils ou para-civils. Ils sont utilisés également pour la détection de casques de simulation, cette détection peut alors être combinée à un dispositif d'oculométrie, également appelé eyetracker, pour la détection de position du regard. Dans le domaine de la réalité virtuelle et des jeux, il existe également de nombreuses applications de ces systèmes.

Actuellement, les systèmes de détection de posture optiques reposent sur deux grands principes. En premier lieu, il est possible d'identifier sur une image, réalisée par un capteur matriciel par exemple, la position d'émetteurs ponctuels lumineux: Des diodes électroluminescentes, appelées également LEDs, peuvent être utilisées comme émetteurs. Par ailleurs, une autre solution consiste à observer un motif non ambigu imprimé sur l'objet dont la position et l'orientation sont à déterminer. A cet effet, on utilise une ou plusieurs caméras pour observer ce motif et l'analyser à partir des images collectées.

Dans le cas de l'utilisation des sources lumineuses du type LEDs, celles-ci sont disposées par groupe. Ces groupes de LEDs sont également appelés cluster. Dans le cas d'applications aéronautiques, ces clusters, disposés sur le casque, ne sont généralement pas contenus dans un plan, et se présentent dans de nombreux cas sous forme de tétraèdre sur le casque.

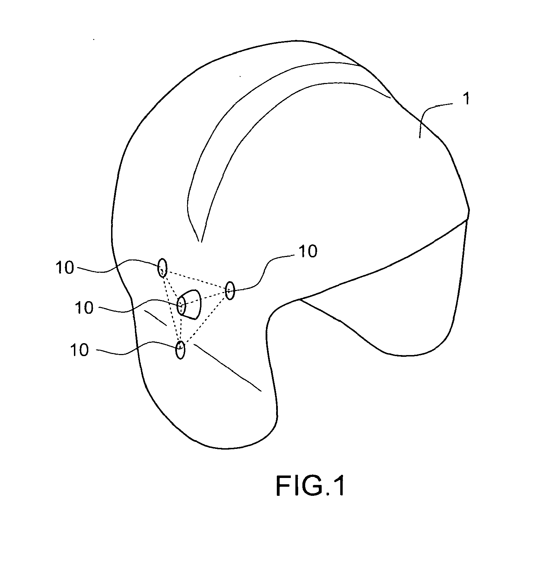

La figure 1 représente un casque 1 utilisé en aéronautique pour des systèmes de détection de position et d'orientation d'objet dans l'espace. Les diodes 10 placées sur le casque forment un cluster en forme de tétraèdre. Le tétraèdre est indiqué en lignes pointillées sur la figure 1. Ce type de système nécessite des capteurs, généralement des caméras placées dans le cockpit. Il s'agit d'un dispositif multi-émetteurs/multi-récepteurs dont les émetteurs sont les diodes et les récepteurs les caméras.

L'analyse des informations issues des capteurs est complexe, compte-tenu de la géométrie spatiale qui nécessite de grandes capacités de calcul. Par ailleurs, l'asservissement d'un système de ce type peut présenter des aspects limitatifs en terme de rapidité du temps de calcul et peut donc affecter la précision des systèmes. Pour atteindre la précision requise, le capteur, de type caméra, doit avoir une résolution élevée et le traitement de l'information capteur est soumis à une prédiction de la position des LEDs et une analyse de zones d'intérêt.

Il existe des variantes de ces systèmes, notamment des dispositifs de détection de l'ombre d'une grille éclairée par une source montée sur casque. Ces systèmes présentent une limitation sur la détermination, avec précision, de l'orientation de l'objet à identifier.

La méthode de détection de la position et de l'orientation d'un objet, par l'observation d'un motif sur ledit objet par des caméras, est moins précise. Cette méthode nécessite de grandes capacités de calcul et pose des problèmes d'utilisation dans des environnements perturbés. Une façon d'améliorer les performances d'un tel système est de multiplier les capteurs et de les placer de façon optimale. Cette solution reste néanmoins difficile à mettre en oeuvre.

D'une manière générale, les solutions actuelles de détection de la position et de l'orientation d'un objet dans l'espace, dans le domaine aéronautique, présentent des limitations liées au compromis entre la mise en oeuvre de solutions extrêmement lourdes en calcul et les exigences de précision requises. Par ailleurs, les contraintes d'environnement aéronautique imposent une redondance des moyens optiques ou des capteurs et ne permettent pas de mettre en oeuvre des solutions techniques simples.

Le document EP0480825A2 décrit un procédé selon l'art antérieur connu.

Le procédé selon l'invention permet, notamment, de pallier les inconvénients précités. En effet, le dispositif comporte des capteurs ou des émetteurs regroupés en cluster ayant la forme de parallélogramme. Le procédé de détermination de la position des capteurs est, de ce fait, simple à mettre en oeuvre et nécessite très peu de calculs, le procédé étant déterministe. Ce procédé est très avantageux dans le cas de systèmes asservis où les temps entre deux mesures sont réduits et la précision de détection accrue.

Avantageusement, le procédé de détection optique de position et d'orientation d'un objet est réalisé au moyen d'un dispositif optique comportant au moins un premier parallélogramme (A'B'C'D') solidaire dudit objet et comprenant des moyens optiques et des moyens d'analyse électroniques permettant de déterminer les coordonnées des quatre sommets du premier parallélogramme (A'B'C'D'), dans un repère orthonormé ($R_0$ (O, $\vec{i}, \vec{j}, \vec{k}$)), comprenant un centre (O), ledit repère comprenant un plan (O, $\vec{j}, \vec{k}$ parallèle au plan-image (Pi). Le plan-image est sans ambiguïté le plan-image du dispositif optique considéré.

Le procédé comporte plusieurs étapes :

- une première étape de définition d'un second parallélogramme de référence ($A_0B_0C_0D_0$) dont le centre (O) est le centre du repère ($R_0$ (O, $\vec{i}, \vec{j}, \vec{k}$)), possédant les mêmes caractéristiques que le premier parallélogramme (A'B'C'D'), situé dans le plan (O, $\vec{j}, \vec{k}$) parallèle au plan image (Pi) ;
- une deuxième étape de définition de la transformation par laquelle le premier parallélogramme (A'B'C'D') est l'image du second parallélogramme ($A_0B_0C_0D_0$), celle-ci se décomposant en une translation $\vec{u}$ et une rotation vectorielle r.
- une troisième étape de détermination par les moyens optiques, d'un quadrilatère (ABCD), obtenu par projection du premier parallélogramme (A'B'C'D') dans le plan-image (Pi), d'abscisse Xi, non nulle, dans le repère (R0) de centre 0, selon une direction perpendiculaire ($\vec{i}$) au plan image (Pi),
- une quatrième étape de détermination :

  ○ d'un premier point (E) appartenant au plan-image (Pi), lorsqu'il existe, tel que le premier point (E) est l'intersection des droites formées par deux cotés opposés du quadrilatère (AB, CD) ;
  ○ d'un second point (F) appartenant au plan-image (Pi), lorsqu'il existe, tel que le second point (F) est l'intersection des droites formées par les deux autres cotés du quadrilatère (AC, BD),
  ○ d'un premier vecteur ($\overrightarrow{OE}$) reliant le centre du repère (O) et le premier point (E) ;
  ○ d'un second vecteur ($\overrightarrow{OF}$) reliant le centre du repère (O) et le deuxième point (F) ;

- une cinquième étape de détermination des images respectives des vecteurs unitaires ($\vec{i}, \vec{j}, \vec{k}$), définissant le repère ($R_0$), par la rotation r, en fonction des premier et second vecteurs ($\overrightarrow{OE}, \overrightarrow{OF}$) et des coordonnées des quatre sommets (A0,B0,C0,D0) du second parallélogramme (A0B0C0D0) ;

- une sixième étape de détermination de la translation $\vec{u}$ en fonction des premier et second vecteurs ($\overrightarrow{OE}, \overrightarrow{OF}$) et des coordonnées des quatre sommets ($A_0$,$B_0$,$C_0$,$D_0$) du second parallélogramme ($A_0B_0C_0D_0$). La connaissance de la translation $\vec{u}$ et de la rotation r suffit à repérer la position de l'objet, ainsi que son attitude dans l'espace.
- enfin, une septième étape peut être réalisée pour déterminer les coordonnées des sommets du premier parallélogramme (A',B',C',D') dans $R_0$, à partir des coordonnées connues des sommets du second parallélogramme ($A_0$, $B_0$,$C_0$,$D_0$) et de la transformation composée d'une translation u et d'une rotation r.

Avantageusement, le procédé de détection peut comporter des formes particulières de parallélogrammes comme des losanges, des rectangles ou des carrés.

Avantageusement, le procédé de détection optique peut comprendre des moyens optiques comprenant un vidéo-projecteur holographique émettant, dans une image, des motifs lumineux nets en tout point de la zone de débattement dudit objet et au moins deux capteurs matriciels linéiques identiques et parallèles entre eux, disposés sur l'objet, les quatre extrémités de ces deux capteurs formant un parallélogramme.

Avantageusement, le procédé de détection optique peut comprendre des moyens optiques comprenant une caméra et au moins quatre diodes émettrices disposées sur l'objet dont chacune représente les extrémités d'un parallélogramme.

D'autres caractéristiques et avantages de l'invention apparaîtront à l'aide de la description qui suit faîte en regard des dessins annexés qui représentent :

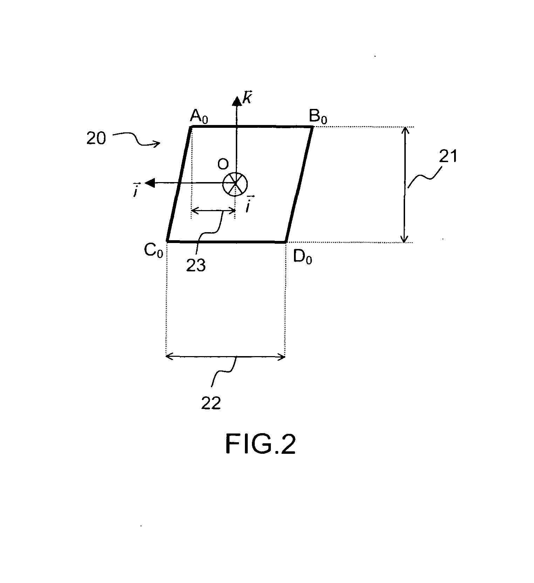

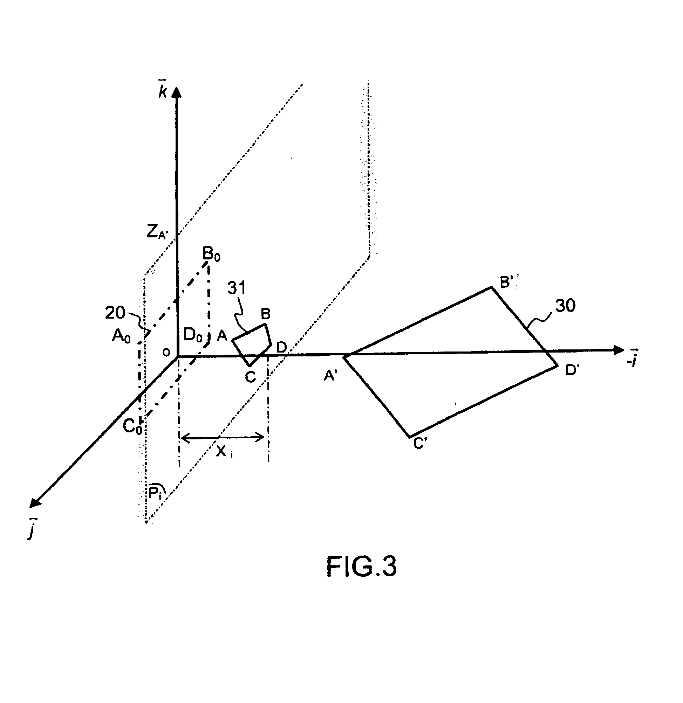

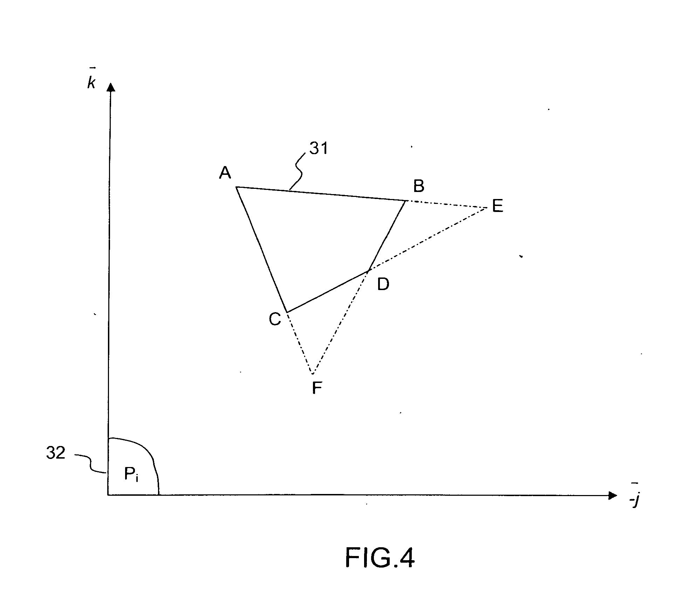

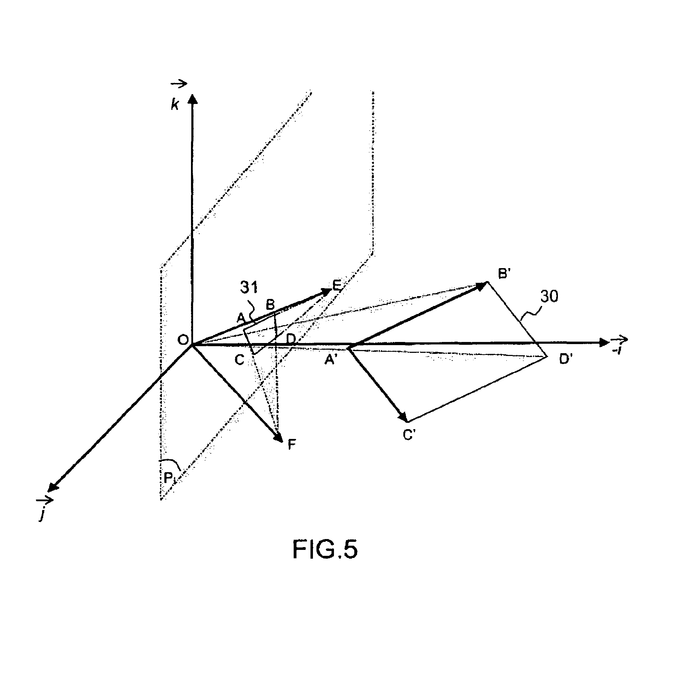

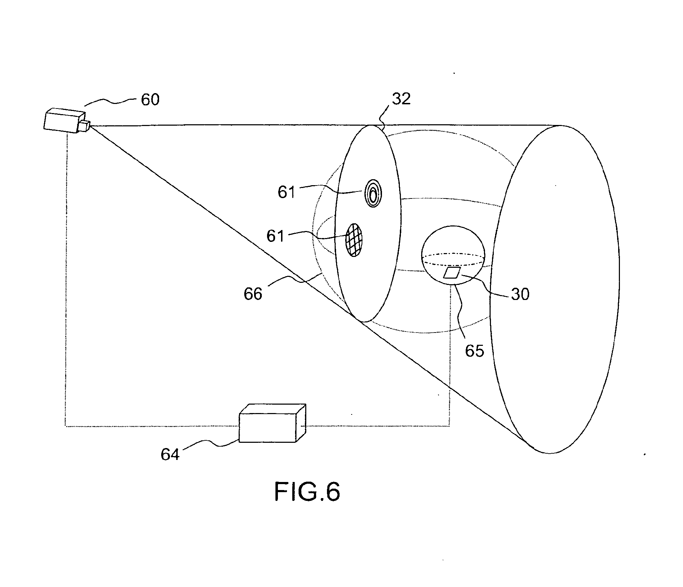

- ● la figure 1 représente un casque de pilote selon l'état de l'art ;
- ● la figure 2 représente les caractéristiques d'un parallélogramme de référence ;
- ● la figure 3 représente une vue 3D du dessin d'un parallélogramme issu de sa projection dans un plan-image ;
- ● la figure 4 représente les points de fuite du dessin de la figure 3, lorsqu'ils existent ;
- ● la figure 5 représente les vecteurs, connus dans $R_0$, des points de fuites du dessin de la figure 3 ;
- ● la figure 6 représente un exemple de dispositif optique selon l'invention.

Le procédé de détection optique selon l'invention consiste en la détermination des sommets d'un parallélogramme A'B'C'D', situé dans un repère $R_0$ de l'espace, noté $R_0$ (O, $\vec{i}, \vec{j}, \vec{k}$), à partir de la connaissance des caractéristiques du parallélogramme et de quatre points connus d'un quadrilatère ABCD. Ce quadrilatère représente un dessin issu de la projection du parallélogramme A'B'C'D' dans un plan-image.

Les caractéristiques A'B'C'D' du parallélogramme peuvent être par exemple sa hauteur, sa largeur et la coordonnée d'un de ses points dans le repère $R_0$. Bien entendu, tout autre mode de représentation pourrait convenir.

Cette détection du parallélogramme se fait au moyen d'un dispositif optique permettant, lorsque le parallélogramme est fixé à un objet, de repérer la position et l'orientation de l'objet dans $R_0$.

La figure 2 montre un exemple d'un parallélogramme 20 de sommets $A_0$, $B_0$, $C_0$ et $D_0$ et dont les caractéristiques sont les mêmes que celles du parallélogramme A'B'C'D' dont la position et l'orientation dans $R_0$ sont à déterminer. Le parallélogramme 20 possède quatre cotés notés $A_0B_0$, $C_0D_0$, $A_0C_0$ et $B_0D_0$ parallèles entre eux deux à deux. La hauteur 21 du parallélogramme est notée H, sa largeur 22 est notée L et la coordonnée 23 de $A_0$ dans le repère $R_0$ selon $\vec{j}$ est notée T.

Les quatre points sont définis dans $R_0$, par les équations suivantes :

$$\overrightarrow{OA_0} = T\vec{j} + \frac{H}{2}\vec{k} \; , \; \overrightarrow{OB_0} = (T - L)\vec{j} + \frac{H}{2}\vec{k} \; , \; \overrightarrow{OC_0} = -\overrightarrow{OB_0} \; \text{ et } \; \overrightarrow{OD_0} = -\overrightarrow{OA_0} \; .$$

Comme indiqué sur la figure 3, ce parallélogramme de référence est placé dans le repère $R_0$, de manière que son centre soit O. Le plan $(O, \vec{j}, \vec{k})$ noté $P_0$ est parallèle au plan $P_i$ noté $(X_i, \vec{j}, \vec{k})$, ce dernier étant le plan-image. Le plan $P_i$ contient le dessin ABCD du quadrilatère où $X_i$ est l'abscisse du plan suivant l'axe $\vec{i}$.

Il est équivalent de connaître les coordonnées des quatre sommets du parallélogramme A'B'C'D' dans $R_0$ que de connaître la transformation analytique qui permet de déduire A'B'C'D' du parallélogramme 20.

Etant donné que les deux parallélogrammes ont les mêmes caractéristiques, il existe une rotation vectorielle directe r selon un axe passant par O et une translation $\vec{u}$, r et $\vec{u}$ étant uniques, telles que,

$$\overrightarrow{OA'} = \vec{u} + r\left(\overrightarrow{OA_0}\right)$$

$$\overrightarrow{OB'} = \vec{u} + r\left(\overrightarrow{OB_0}\right)$$

$$\overrightarrow{OC'} = \vec{u} + r\left(\overrightarrow{OC_0}\right)$$

$$\overrightarrow{OD'} = \vec{u} + r\left(\overrightarrow{OD_0}\right)$$

La figure 3 représente le parallélogramme 30 noté A'B'C'D', dans le repère $R_0$. Son dessin 31, issue de la projection de A'B'C'D' dans le plan $P_i$ est représenté par le quadrilatère ABCD.

Les coordonnées du quadrilatère ABCD dans $R_0$ étant connues par le procédé de détection optique, l'algorithme permet à partir du dessin 31 et du parallélogramme de référence 20, de connaître les transformations r et $\vec{u}$. La position et l'attitude de l'objet peuvent être déduite à partir de r et $de\ \vec{u}$ directement, sans spécifiquement connaître les positions des sommets du parallélogramme A'B'C'D'.

La figure 4 représente dans le plan $P_i$, le quadrilatère ABCD. Lorsqu'ils existent, ce qui correspond au cas le plus fréquent, les coordonnées des points d'intersection des droites (AB) et (CD) et des droites (AD) et (BC) sont déterminées par la connaissance des coordonnées des points A, B, C, D dans $R_0$. On note alors, E le point d'intersection des droites (AB) et (CD) et F le point d'intersection des droites (AD) et (BC). On note, dans ce cas, $\vec{e}$ le vecteur $\overrightarrow{OE}$ et $\vec{f}$ le vecteur $\overrightarrow{OF}$ .

Il est connu que le vecteur $\vec{e}$ est positivement proportionnel à $\overrightarrow{A'B'}$ et que le vecteur $\vec{f}$ soit positivement proportionnel à $\overrightarrow{A'C'}$ dans $R_0$.

La figure 5 représente lorsqu'ils existent, les vecteurs $\overrightarrow{OE}$ et $\overrightarrow{OF}$ dans le repère $R_0$ et illustre la propriété précitée.

Les cas, où E n'existe pas ou F n'existe pas ou que E et F n'existent pas, correspondent, respectivement, aux relations, qui découlent de la géométrie du quadrilatère ABCD, suivantes :

- les cotés AB et CD sont parallèles. ABCD est un trapèze selon AB, c'est à dire que le coté A'B' est parallèle au plan image et le coté A'C' ne l'est pas. On détermine $\vec{e} = \overrightarrow{AB}$ et $\vec{f} = \overrightarrow{OF}$.

- les cotés BC et AD sont parallèles, ABCD est un trapèze selon BC, c'est à dire que le coté A'C' est parallèle au plan image et le coté A'B' ne l'est pas ; On détermine $\vec{f} = \overrightarrow{AC}$ et $\vec{e} = \overrightarrow{OE}$.

- ABCD est un parallélogramme, c'est à dire que le parallélogramme A'B'C'D' est parallèle au plan image. On a les deux relations suivantes : $\vec{e} = \overrightarrow{AB}$ et $\vec{f} = \overrightarrow{AC}$.

Les calculs suivants sont réalisés dans le cas où E et F existent, les simplifications se faisant naturellement pour les cas particuliers où une solution déterminée existe pour chaque cas.

De $\overrightarrow{A'B'} = r\left(\overrightarrow{A_0B_0}\right)$, on obtient, avec les notations précédentes : $\overrightarrow{A'B'} = -L \cdot r\left(\vec{j}\right)$, on déduit que

$$r\left(\vec{j}\right) = -\frac{\vec{e}}{\|\vec{e}\|} \text{ , étant donné que } \|\vec{j}\| = 1 \Rightarrow \|r(\vec{j})\| = 1.$$

De même, de $\overrightarrow{A'C'} = r\left(\overrightarrow{A_0C_0}\right)$, on obtient, avec les notations précédentes :

$$\overrightarrow{A'C'} = (L - 2T) \cdot r\left(\vec{j}\right) - Hr\left(\vec{k}\right),$$

On déduit que : $r\left(\vec{k}\right) = \frac{q}{H}r\left(\vec{j}\right) - \frac{\sqrt{q^2 + H^2}}{H}\frac{\vec{f}}{\|\vec{f}\|}$ , où q = L - 2T.

r étant une rotation directe, on obtient : $r(\vec{i}) = r(\vec{j}) \wedge r(\vec{k})$.

Les trois images respectives de $\vec{i}, \vec{j}, \vec{k}$ par la rotation r sont déterminées en fonction des caractéristiques connues du parallélogramme et des deux vecteurs $\vec{e}$ et $\vec{f}$.

De $\overrightarrow{OA'} = \vec{u} + r\left(\overrightarrow{OA_0}\right)$, on tire $\vec{u} = \overrightarrow{OA'} - T \cdot r\left(\vec{j}\right) - \frac{H}{2} \cdot r\left(\vec{k}\right)$.

Si on appelle $\mu_E$ le réel connu tel que $\overrightarrow{AE} = \mu_E \overrightarrow{AB}$ et k le réel tel que $\overrightarrow{OA'} = k \cdot \overrightarrow{OA}$, il est alors vérifié

que : $k = \frac{A'B'}{OE} \cdot |\mu_E - 1|$.

De la même manière on a $\mu_F$ le réel défini par la relation $\overrightarrow{AF} = \mu_F \overrightarrow{AC}$.

On obtient le résultat analytique de la translation recherchée : $\vec{u} = k \cdot \overrightarrow{OA} - T \cdot r\left(\vec{j}\right) - \frac{H}{2} \cdot r\left(\vec{k}\right)$, avec k connu.

Le parallélogramme A'B'C'D' est déduit par la détermination de la transformation composée d'une rotation vectorielle connue et d'une translation connue, du parallélogramme de référence $A_0B_0C_0D_0$.

Dans le cas où A'B'C'D' est un losange on a relation supplémentaire : |1 - $\mu_E$| ● OF |1 - $\mu_F$| ● OE.

Dans le cas où A'B'C'D' est un rectangle on a relation supplémentaire : $\left(\overrightarrow{OE} \bullet \overrightarrow{OF}\right) = 0$. (

Dans le cas où A'B'C'D' est un carré, les expressions analytiques des transformations de $\vec{i}, \vec{j}, \vec{k}$ par la rotation r sont simplifiées. On obtient : L = H = 2xT et la rotation du vecteur $\vec{k}$ est déterminée de manière simple : $r\left(\vec{k}\right) = -\frac{\vec{f}}{\|\vec{f}\|}$ .

Les deux relations supplémentaires, correspondantes au cas du losange et du rectangle, sont toutes les deux valables pour le cas du carré.

La figure 6 est un exemple de dispositif, selon l'invention. Un objet 65 comportant des récepteurs électro-optiques, de type capteurs matriciels linéiques et un moyen de projection d'images, les dites images comportant des motifs lumineux 61.

Les capteurs sont regroupés de telle manière qu'ils forment deux à deux des parallélogrammes 30. Les capteurs sont parallèles entre eux deux à deux et de taille égale.

Par ailleurs, un exemple de moyen de projection d'images, selon l'invention, est d'utiliser un moyen optique émettant, en tout point de la zone de débattement 66 de l'objet 65, une image nette. Les capteurs placés sur le casque reçoivent des signaux non ambigus provenant de cette image.

A cet effet, un exemple de réalisation de l'invention utilise comme moyen de projection, un vidéo-projecteur holographique 60. De tels vidéo-projecteurs holographiques sont réalisés et commercialisés par la société Light Blue Optics et sont connus sous la marque PVPro. Ce vidéo-projecteur holographique possède la propriété avantageuse d'émettre une image nette en tout point de la zone de débattement 66.

Ce vidéo-projecteur holographique, appelé VPH par la suite, comporte une source de lumière cohérente, qui est généralement une diode laser, un afficheur permettant de réaliser une image de phase, des moyens optiques agencés de façon à créer à partir de l'onde émise par la source de lumière, une première onde référence et une seconde onde modulée par l'afficheur et des moyens permettant de faire interférer ces deux ondes. L'image finale obtenue est un hologramme de Fraunhofer de l'image de phase générée sur l'afficheur. Il est possible de générer tout type d'image par ce moyen. L'afficheur peut être un afficheur à cristaux liquides, par exemple de type LCOS.

Dans ces conditions, le centre O du repère $R_0$ est défini par un point du VPH, et le plan $(O, \vec{j}, \vec{k})$ est le plan-image parallèle au plan image 32 de l'image projetée comprenant l'origine.

De manière à repérer l'objet dans l'espace, le VPH émet des images comportant des motifs lumineux 61 sur les capteurs situés sur le casque. L'analyse des informations issues des capteurs est réalisée par un calculateur numérique 64, placé en aval des capteurs, dans la chaîne de traitement des signaux reçus.

L'analyse des signaux reçus par chaque cellule permet de reconstituer le dessin, obtenu par projection du parallélogramme positionné sur l'objet dans le plan-image. Le dessin est déterminé, de manière quasiment naturelle, par la photographie des motifs déformés dans le plan local du parallélogramme. Connaissant les motifs originels et leurs déformations identifiées par les capteurs, la connaissance à priori des caractéristiques du parallélogramme nous donnent inversement son dessin. Celui-ci représente un quadrilatère dans le plan-image.

A partir de ce dessin, et de la connaissance des caractéristiques du parallélogramme, à priori connues, le procédé permet de retrouver d'une manière simple la position et l'orientation du cluster dans le repère $R_0$.

Une seconde variante de réalisation est de considérer un dispositif optique comportant au moins une caméra et un casque de pilote comportant des diodes émettrices regroupées en cluster. Au moins un cluster forme un parallélogramme A'B'C'D', dont les sommets sont des diodes.

Dans ces conditions, la zone de débattement est tout ou une partie du cockpit.

Le centre du repère $R_0$ est la caméra, la plan $(O, \vec{j}, \vec{k})$ est le plan-image de la caméra. La caméra obtient, alors, dans son plan-image la représentation du quadrilatère ABCD issu de la projection du parallélogramme A'B'C'D' dans le plan-image.

Les moyens d'analyse peuvent donc à partir de la connaissance de la représentation du quadrilatère dans un plan-image connu et des caractéristiques du parallélogramme connues à priori, retrouver la position et l'orientation du cluster.

**Revendications**

1. Procédé de détection optique de position et d'orientation d'un objet au moyen d'un dispositif optique comportant au moins un premier parallélogramme (A'B'C'D') solidaire dudit objet, dont les caractéristiques sont connues et comprenant des moyens optiques et des moyens d'analyse électroniques permettant de déterminer les coordonnées des quatre sommets du premier parallélogramme (A'B'C'D'), dans un repère $(R_0 (O, \vec{i}, \vec{j}, \vec{k})$, orthonormé, comprenant un centre (O), ledit repère comprenant un plan $(O, \vec{j}, \vec{k})$ parallèle au plan-image (Pi), ledit procédé comprenant les étapes suivantes :

   - une première étape de définition d'un second parallélogramme de référence $(A_0B_0C_0D_0)$ dont le centre (O) est le centre du repère $(R_0 (O, \vec{i}, \vec{j}, \vec{k}))$, possédant les mêmes caractéristiques que le premier parallélogramme (A'B'C'D'), situé dans le plan $(O, \vec{j}, \vec{k})$ parallèle au plan image (Pi) ;
   - une deuxième étape de définition de la transformation par laquelle le premier parallélogramme (A'B'C'D') est l'image du second parallélogramme $(A_0B_0C_0D_0)$, celle-ci se décomposant en une translation $\vec{u}$ et une rotation vectorielle r. ledit procédé étant **caractérisé par** :

- une troisième étape de détermination par les moyens optiques, d'un quadrilatère (ABCD), obtenu par projection du premier parallélogramme (A'B'C'D') dans le plan-image (Pi), d'abscisse Xi, non nulle, dans le repère (R0) de centre 0, selon une direction perpendiculaire ($\vec{i}$) au plan image (Pi),

- une quatrième étape de détermination :

○ d'un premier point (E) appartenant au plan-image (Pi), lorsqu'il existe, tel que le premier point (E) est l'intersection des droites formées par deux cotés opposés du quadrilatère (AB, CD) ;

○ d'un second point (F) appartenant au plan-image (Pi), lorsqu'il existe, tel que le second point (F) est l'intersection des droites formées par les deux autres cotés du quadrilatère (AC, BD),

○ d'un premier vecteur ($\overrightarrow{OE}$), reliant le centre du repère (O) et le premier point (E) ;

○ d'un second vecteur ($\overrightarrow{OF}$), reliant le centre du repère (O) et le deuxième point (F) ;

- une cinquième étape de détermination des images respectives des vecteurs unitaires ($\vec{i}, \vec{j}, \vec{k}$), définissant le repère ($R_0$), par la rotation (r) de la transformation, en fonction des premier et second vecteurs ($\overrightarrow{OE}, \overrightarrow{OF}$) et des caractéristiques connues du second parallélogramme ($A_0B_0C_0D_0$) ;

- une sixième étape de détermination de la translation ($\vec{u}$) de la transformation en fonction des premier et second vecteurs ($\overrightarrow{OE}, \overrightarrow{OF}$), du vecteur reliant le centre du repère (O) à un sommet du quadrilatère (ABCD) et des caractéristiques connues du second parallélogramme ($A_0B_0C_0D_0$).

2. Procédé de détection selon la revendication 1, **caractérisé en ce qu'**il comporte une septième étape de détermination des coordonnées des sommets (A', B', C', D') du premier parallélogramme dans le repère ($R_0$), en fonction des coordonnées connues des sommets du second parallélogramme ($A_0B_0C_0D_0$) et de la transformation composée d'une translation ($\vec{u}$) et d'une rotation (r).

3. Procédé de détection selon l'une quelconque des revendications 1 ou 2, **caractérisé en ce que** le parallélogramme est un losange.

4. Procédé de détection selon l'une quelconque des revendications 1 ou 2, **caractérisé en ce que** le parallélogramme est un rectangle.

5. Procédé de détection selon l'une quelconque des revendications 1 ou 2, **caractérisé en ce que** le parallélogramme est un carré.

6. Procédé de détection optique selon l'une quelconque des revendications 1 à 5, **caractérisé en ce que** le dispositif comprend des moyens optiques comprenant un vidéo-projecteur holographique émettant dans un plan-image des motifs lumineux nets en tout point de la zone de débattement correspondant à l'espace dans lequel l'objet est susceptible de bouger et au moins deux capteurs matriciels linéiques identiques et parallèles entre eux, disposés sur l'objet, les quatre extrémités de ces deux capteurs formant un parallélogramme.

7. Procédé de détection optique selon l'une quelconque des revendications 1 à 5, **caractérisé en ce que** le dispositif comprend des moyens optiques comprenant une caméra et au moins quatre diodes émettrices disposées sur l'objet dont chacune représente les extrémités d'un parallélogramme.

8. Procédé de détection selon l'une quelconque des revendications précédentes, **caractérisé en ce que** l'objet est un casque de pilote, l'ensemble du dispositif optique étant installé dans un cockpit d'aéronef.

**Claims**

1. A method for optical detection of the position and orientation of an object by means of an optical device comprising at least one first parallelogram (A'B'C'D') integral with said object, the characteristics of which are known and comprising optical means and electronic analysis means allowing the coordinates of the four vertices of the first parallelogram (A'B'C'D') to be determined in an orthonormal frame $(R_0 (O, \vec{i}, \vec{j}, \vec{k}))$, comprising a centre (O), said frame comprising a plane $(O, \vec{j}, \vec{k})$ parallel to the image-plane (Pi), said method comprising the following steps:

- a first step of defining a second reference parallelogram $(A_0B_0C_0D_0)$, the centre (O) of which is the centre of the frame $(R_0 (O, \vec{i}, \vec{j}, \vec{k}))$, having the same characteristics as the first parallelogram (A'B'C'D'), located in the plane $(O, \vec{j}, \vec{k})$ that is parallel to the image-plane (Pi);
- a second step of defining the transformation by which the first parallelogram (A'B'C'D') is the image of the second parallelogram $(A_0B_0C_0D_0)$, which is broken down into a translation $\vec{u}$ and a vector rotation r, said method being **characterised by**:
- a third step of determining, through the optical means, a quadrilateral (ABCD) that is obtained by projecting the first parallelogram (A'B'C'D') in the image-plane (Pi), with a non-zero abscissa Xi, in the frame (R0) of centre 0 along a direction that is perpendicular $(\vec{i})$ to the image plane (Pi);
- a fourth step of determining:

  ○ a first point (E) belonging to the image-plane (Pi), when it exists, so that the first point (E) is the intersection of the straight lines formed by two opposite sides of the quadrilateral (AB, CD);
  ○ a second point (F) belonging to the image-plane (Pi), when it exists, so that the second point (F) is the intersection of the straight lines formed by the other two sides of the quadrilateral (AC, BD);

  ○ a first vector $(\overrightarrow{OE})$ connecting the centre of the frame (O) and the first point (E);

  ○ a second vector $(\overrightarrow{OF})$, connecting the centre of the frame (O) and the second point (F);

- a fifth step of determining respective images of the unit vectors $(\vec{i}, \vec{j}, \vec{k})$ defining the frame $(R_0)$, by the rotation (r) of the transformation, as a function of the first and second vectors $(\overrightarrow{OE}, \overrightarrow{OF})$ and of the known characteristics of the second parallelogram $(A_0B_0C_0D_0)$;

- a sixth step of determining the translation $\vec{u}$ of the transformation as a function of the first and second vectors $(\overrightarrow{OE}, \overrightarrow{OF})$, of the vector connecting the center of the frame (O) to a vertice of the quadrilateral (ABCD) and of the known characteristics of the second parallelogram $(A_0B_0C_0D_0)$.

2. The detection method according to claim 1, **characterised in that** it comprises a seventh step of determining coordinates of the vertices (A', B', C', D') of the first parallelogram in the frame $(R_0)$ as a function of the known coordinates of the vertices of the second parallelogram $(A_0B_0C_0D_0)$ and of the transformation that is composed of a translation $\vec{u}$ and a rotation (r).

3. The detection method according to any one of claims 1 to 2, **characterised in that** the parallelogram is a rhombus.

4. The detection method according to any one of claims 1 to 2, **characterised in that** the parallelogram is a rectangle.

5. The detection method according to any one of claims 1 to 2, **characterised in that** the parallelogram is a square.

6. The optical detection method according to any one of claims 1 to 5, **characterised in that** the device comprises optical means comprising a holographic video projector emitting sharp luminous patterns in an image-plane at any point of the zone of travel that corresponds to the space in which the object is likely to move and at least two identical linear matrix sensors that are mutually parallel, disposed on the object, the four ends of said two sensors forming a parallelogram.

7. The optical detection method according to any one of claims 1 to 5, **characterised in that** the device comprises optical means comprising a camera and at least four emitting diodes disposed on the object, each of which represents the ends of a parallelogram.

8. The detection method according to any one of the preceding claims, **characterised in that** the object is a pilot helmet, the whole of the optical device being installed in an aircraft cockpit.

**Patentansprüche**

1. Verfahren zum optischen Erkennen der Position und Orientierung eines Objekts mittels einer optischen Vorrichtung, die wenigstens ein erstes Parallelogramm (A'B'C'D') einstückig mit dem Objekt umfasst, dessen Charakteristiken bekannt sind, und optische Mittel und elektronische Analysemittel umfasst, die die Ermittlung der Koordinaten der vier Scheitelpunkte des ersten Parallelogramms (A'B'C'D') in einem orthonormierten Koordinatensystem ($R_0$ (O, $\vec{i}$, $\vec{j}$, $\vec{k}$)), der einen Mittelpunkt (O) aufweist, wobei das Koordinatensystem eine Ebene (O, $\vec{j}$, $\vec{k}$) parallel zur Bildebene (Pi) umfasst, wobei das Verfahren die folgenden Schritte beinhaltet:

   - einen ersten Schritt des Definierens eines zweiten Referenzparallelogramms ($A_0B_0C_0D_0$), dessen Mittelpunkt (O) der Mittelpunkt des Koordinatensystems ($R_0$ (O, $\vec{i}$, $\vec{j}$, $\vec{k}$)) ist, mit denselben Charakteristiken wie das erste Parallelogramm (A'B'C'D'), das sich in der Ebene (O, $\vec{j}$, $\vec{k}$) parallel zur Bildebene (Pi) befindet;
   - einen zweiten Schritt des Definierens der Transformation, durch die das erste Parallelogramm (A'B'C'D') das Bild des zweiten Parallelogramms ($A_0B_0C_0D_0$) ist, wobei sich dieses in eine Translation ($\vec{u}$) und eine Vektorrotation r zerlegt,
   wobei das Verfahren **gekennzeichnet ist durch**:
   - einen dritten Schritt des Ermittelns, mit den optischen Mitteln, eines Vierecks (ABCD), das **durch** Projektion des ersten Parallelogramms (A'B'C'D') in der Bildebene (Pi) erhalten wird, mit einer Abszisse Xi von ungleich null, im Koordinatensystem (R0) mit Mittelpunkt 0, gemäß einer Richtung lotrecht ($\vec{i}$) zur Bildebene (Pi),
   - einen vierten Schritt des Ermittelns:

     ○ eines ersten Punkts (E), der ggf. zur Bildebene (Pi) gehört, so dass der erste Punkt (E) der Schnittpunkt der Geraden ist, die **durch** zwei gegenüberliegende Seiten des Vierecks (AB, CD) gebildet wird;
     ○ eines zweiten Punkts (F), der ggf. zur Bildebene (Pi) gehört, so dass der zweite Punkt (F) der Schnittpunkt der Geraden ist, die **durch** die zwei anderen Seiten des Vierecks (AC, BD) gebildet werden,

     ○ eines ersten Vektors ($\overrightarrow{OE}$), der den Mittelpunkt des Koordinatensystems (O) und den ersten Punkt (E) verbindet;

     ○ eines zweiten Vektors ($\overrightarrow{OF}$), ( der den Mittelpunkt des Koordinatensystems (O) und den zweiten Punkt (F) verbindet;

   - einen fünften Schritt des Ermittelns der jeweiligen Bilder der Einheitsvektoren (O, $\vec{j}$, $\vec{k}$), die das Koordinatensystem ($R_0$) definieren, **durch** die Rotation (r) der Transformation, in Abhängigkeit vom ersten und zweiten Vektor ($\overrightarrow{OE}$, $\overrightarrow{OF}$) und von bekannten Charakteristiken des zweiten Parallelogramms ($A_0B_0C_0D_0$);
   - einen sechsten Schritt des Ermittelns der Translation ($\vec{u}$) der Transformation in Abhängigkeit vom ersten und zweiten Vektor ($\overrightarrow{OE}$, $\overrightarrow{OF}$), des Vektors, der den Mittelpunkt des Koordinatensystems (O) mit einem Scheitelpunkt des Viereckes ABCD und von den bekannten Charakteristiken des zweiten Parallelogramms ($A_0B_0C_0D_0$).

2. Erkennungsverfahren nach Anspruch 1, **dadurch gekennzeichnet, dass** es einen siebten Schritt des Ermittelns der Koordinaten der Scheitelpunkte (A'B'C'D') des ersten Parallelogramms im Koordinatensystem ($R_0$) in Abhängigkeit von den bekannten Koordinaten der Scheitelpunkte des zweiten Parallelogramms ($A_0B_0C_0D_0$) und der Transformation beinhaltet, die sich aus einer Translation ($\vec{u}$) und einer Rotation (r) zusammensetzt.

3. Erkennungsverfahren nach Anspruch 1 oder 2, **dadurch gekennzeichnet, dass** das Parallelogramm eine Raute ist.

4. Erkennungsverfahren nach Anspruch 1 oder 2, **dadurch gekennzeichnet, dass** das Parallelogramm ein Rechteck ist.

5. Erkennungsverfahren nach Anspruch 1 oder 2, **dadurch gekennzeichnet, dass** das Parallelogramm ein Quadrat ist.

6. Optisches Erkennungsverfahren nach einem der Ansprüche 1 bis 5, **dadurch gekennzeichnet, dass** die Vorrichtung optische Mittel umfasst, die einen holografischen Videoprojektor umfassen, der scharfe Lichtmotive in einer Bildebene an jedem Punkt der Ausschlagzone emittiert, der dem Raum entspricht, in dem sich das Objekt wahrscheinlich bewegen wird, und wenigstens zwei identische lineare und zueinander parallele Matrixsensoren, die an dem Objekt angeordnet sind, wobei die vier Enden dieser beiden Sensoren ein Parallelogramm bilden.

7. Optisches Erkennungsverfahren nach einem der Ansprüche 1 bis 5, **dadurch gekennzeichnet, dass** die Vorrichtung optische Mittel umfasst, die eine Kamera und wenigstens vier Emitter-Dioden umfassen, die an dem Objekt angeordnet sind und jeweils die Enden eines Parallelogramms bilden.

8. Erkennungsverfahren nach einem der vorherigen Ansprüche, **dadurch gekennzeichnet, dass** das Objekt ein Pilotenhelm ist, wobei die gesamte optische Vorrichtung in dem Cockpit eines Luftfahrzeugs installiert ist.

FIG.1

FIG.2

FIG.3

FIG.4

FIG.5

FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0480825 A2